(19) Europäisches Patentamt
European Patent Office
Office européen des brevets

(11) Veröffentlichungsnummer: **0 194 521**
**B1**

(12) # EUROPÄISCHE PATENTSCHRIFT

(45) Veröffentlichungstag der Patentschrift: **13.09.89**

(51) Int. Cl.⁴: **C07F 9/32**, C07F 9/53

(21) Anmeldenummer: **86102599.7**

(22) Anmeldetag: **28.02.86**

(54) **Phosphorhaltige alpha-Aminonitrile und Verfahren zu ihrer Herstellung.**

(30) Priorität: **11.03.85 DE 3508573**

(43) Veröffentlichungstag der Anmeldung: **17.09.86 Patentblatt 86/38**

(45) Bekanntmachung des Hinweises auf die Patenterteilung: **13.09.89 Patentblatt 89/37**

(84) Benannte Vertragsstaaten: **CH DE FR GB IT LI**

(56) Entgegenhaltungen:
**EP-A- 0 011 245**
**EP-A- 0 085 391**
**DE-A- 2 717 440**

**TETRAHEDRON, Band 39, Nr. 8, 1983, Seiten 1299-1305; J.M. VILLANUEVA et al.: "Preparation d'acides aminocarboxy-alkylphosphoniques optiquement actifs"**

(73) Patentinhaber: **HOECHST AKTIENGESELLSCHAFT, Postfach 80 03 20, D-6230 Frankfurt am Main 80(DE)**

(72) Erfinder: **Zeiss, Hans-Joachim, Dr., Hauptstrasse 127, D-6231 Sulzbach(DE)**
Erfinder: **Mildenberger, Hilmar, Dr., Fasanenstrasse 24, D-6233 Kelkheim (Taunus)(DE)**

EP 0 194 521 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von phosphorhaltigen α-Aminonitrilen der allgemeinen Formel I

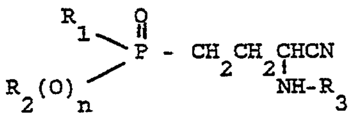

(I)

worin

$R_1$ = ($C_1$-$C_6$)-Alkyl, das durch Halogen oder Alkoxycarbonyl ein- oder mehrfach substituiert sein kann, ($C_6$-$C_{10}$)-Aryl, ($C_7$-$C_{10}$)-Aralkyl oder ($C_3$-$C_{10}$)-Cycloalkyl,

$R_2$ = ($C_1$-$C_6$)-Alkyl, das durch Halogen ein- oder mehrfach substituiert sein kann, ($C_6$-$C_{10}$)-Aryl, ($C_7$-$C_{10}$)-Aralkyl, ($C_3$-$C_{10}$)-Cycloalkyl,

$R_3$ = Wasserstoff, ($C_1$-$C_6$)-Alkyl oder -Phenalkyl, ($C_1$-$C_6$)-Acyl, ($C_1$-$C_6$)-Alkoxycarbonyl oder ($C_6$-$C_{10}$)-Aryloxycarbonyl

und

n = Null oder eins bedeuten,

dadurch gekennzeichnet, daß man Verbindungen der allgemeinen Formel II

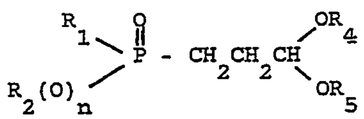

(II)

worin $R_4$ und $R_5$ unabhängig voneinander ($C_1$-$C_6$)-Acyl, ($C_1$-$C_6$)-Alkoxycarbonyl, Phenoxycarbonyl oder Naphthoxycarbonyl bedeuten,

in Gegenwart von Alkalicyaniden mit Aminen der allgemeinen Formel III

$H_2N$-$R_3$ (III),

umsetzt und gewünschtenfalls aus den erhaltenen Verbindungen der Formel I einen Rest $R_3 \neq H$ nach bekannten Methoden abspaltet.

In den Verbindungen der Formel II bedeutet $R_1$, bevorzugt niederes Alkyl, insbesondere Methyl oder Ethyl. "Aryl" steht bevorzugt für den Phenylrest, "Aralkyl" für den Benzylrest. Unter Cycloalkyl sind insbesondere Cyclopropyl, Cyclopentyl und Cyclohexyl zu verstehen. $R_2$ bedeutet bevorzugt niederes Alkyl, $R_4$ und $R_5$ bevorzugt Acetyl, Methoxy- oder Ethoxycarbonyl.

In den Aminen der Formel III bedeutet $R_3$ bevorzugt Wasserstoff oder ($C_1$-$C_2$)-Alkoxycarbonyl.

Die Abspaltung von Resten $R_3 \neq H$ aus den in 1. Stufe erhaltenen Verfahrensprodukten erfolgt nach bekannten, dem Fachmann geläufigen Methoden, z.B. durch katalytische Hydrierung oder Verseifung.

Ist $R_3$ z.B. ein Rest, der ein Chiralitätszentrum enthält, (z.B. 1-Phenylethyl-(1)), so kann das erfindungsgemäße Verfahren zur Herstellung optisch aktiver phosphorhaltiger α-Aminonitrile genutzt werden. Dabei wird die Chiralität von $R_3$ auf das der CN-Gruppe benachbarte C-Atom übertragen (vgl. Tetrahedron 39, 1299 (1983)). Aus den erhaltenen Verbindungen mit $R_3 \neq H$ kann man dann durch Hydrierung unter Pd-Katalyse den Rest $R_3$ abspalten und so zu optisch aktiven Verbindungen mit $R_3$ = H gelangen.

Verbindungen der Formel II lassen sich einfach nach bekannten Verfahren herstellen.

So wird z.B. in der DE-OS 25 16 343 die Herstellung von Verbindungen der Formel II durch Addition von Phosphorwasserstoffverbindungen an Diacylate ungesättigter Aldehyde beschrieben.

Das erfindungsgemäße Verfahren wird im allgemeinen so durchgeführt, daß man Verbindungen der allgemeinen Formel II mit Aminen der allgemeinen Formel III in wäßriger Reaktionslösung in Gegenwart von Alkalicyaniden, insbesondere denen des Kaliums und des Natriums, reagieren läßt und anschließend das entstandene Produkt der allgemeinen Formel I mit einem nicht mit Wasser mischbaren Lösungsmittel extrahiert.

Die Alkalicyanide werden in Mengen von 90-120 Mol-%, bevorzugt jedoch in äquimolaren Mengen, bezogen auf die Komponente mit der allgemeinen Formel II, eingesetzt.

Das Verfahren wird vorteilhaft im pH-Bereich von 8-12 durchgeführt. Bei Verwendung von stark basischen Ausgangsstoffen der Formel III ist es daher erforderlich, in gepufferter Lösung zu arbeiten. Als Puffersysteme verwendet man solche, die nicht in die Reaktion eingreifen, z.B. das System $HPO_4^-/PO_4^{2-}$. Weitere geeignete Puffersysteme sind dem Fachmann bekannt und brauchen nicht im einzelnen aufgezählt zu werden.

Zum Beispiel wird im Falle der Verwendung von Ammoniak als Aminkomponente (allgemeine Formel III : $R_3$ = H) durch Zugabe von Ammoniumchlorid der pH-Wert der Reaktionslösung zwischen 8 und 12, bevorzugt zwischen 9,0 und 10,8, eingestellt.

Die Verbindungen der Formel III werden in mindestens äquimolaren Mengen, bevorzugt jedoch im Überschuß eingesetzt.

Das erfindungsgemäße Verfahren wird bei Reaktionstemperaturen von 0-100°C, vorzugsweise von 25-45°C, durchgeführt.

Die Reaktionsdauer beträgt 0,3– 24 h, vorzugsweise 0,6– 8 h.

Es ist überraschend, daß man die gut zugänglichen Acylalderivate der Formel II anstelle der ihnen zugrundeliegenden, schwer zugänglichen Aldehyde unter den Bedingungen der Strecker-Synthese zu α-Aminonitrilen der Formel I umsetzen kann. Dies um so mehr, als Aldehydderivate, die die Acetalstruktur

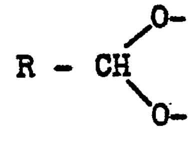

enthalten, bekanntlich unter basischen Reaktionsbedingungen, wie sie bei der Strecker-Synthese herrschen, chemisch weitgehend inert sind und Reaktionen an der maskierten Aldehydfunktion normalerweise nur unter sauren Reaktionsbedingungen ablaufen. Zwar wurden bei der Herstellung nicht-

phosphorhaltiger Aminosäuren aus Aldehydacylalen α-Aminonitrile als Zwischenstufen postuliert, jedoch ist ihre Isolierung nicht beschrieben und die Ausbeuten der Aminosäuren variieren, je nach Substituent, stark. (Ber. 98, 1677 (1965). Das erfindungsgemäße Verfahren dagegen gestattet die Herstellung phosphorhaltiger α-Aminonitrile der allgemeinen Formel I in nahezu quantitativen Ausbeuten. α-Aminonitrile der allgemeinen Formel I stellen wertvolle Vorprodukte dar, da sie sich nach literaturbekannten Verfahren (Houben-Weyl XI/2, S. 305 und s. 371, G. Thieme, Stuttgart 1958) sowohl im sauren wie auch im alkalischen Medium zu biologisch aktiven Aminosäuren verseifen lassen, die bakterizide (Helv. Chim. Acta 55, 224 (1972), fungizide (Sci. Rep. Meiji Seika Kaisha 13, 34 (1973) und herbizide Wirkung (DE-OS 2 717 440) besitzen. So entsteht z.B. durch Verseifung der nachfolgenden Beispiele die Verbindung 3-Methylphosphinoyl-1-aminobuttersäure, die ausgezeichnete herbizide Eigenschaften besitzt (DE-OS 2 717 440).

Die nachfolgenden Beispiele sollen das Verfahren näher erläutern, ohne daß dadurch eine Einschränkung beabsichtigt ist.

Beispiel 1

2-Amino-4-(2-methylpropoxy-methylphosphinoyl)-butyronitril

14,70 g (0.05 mol) 3,3-Diacetoxy-1-(2-methylpropoxymethylphosphinoyl)-propan, 5,30 g (0.1 mol) Ammoniumchlorid und 2,45 g (0.05 mol) Natriumcyanid werden in 60 ml konz. Ammoniak (ca. 25%ig) gelöst, wobei die Temperatur auf 40°C ansteigt. Die Reaktionsmischung wird 6 h bei Raumtemperatur gerührt. Der pH-Wert steigt von 9,4 zu Beginn auf 10,4 gegen Ende der Reaktion an. Die wäßrige Reaktionsmischung wird 3 mal mit je 100 ml Dichlormethan extrahiert, die organischen Extrakte vereinigt, über $NA_2SO_4$ getrocknet und eingeengt. Lösungsmittelreste werden im Hochvakuum bei Raumtemperatur entfernt.

Man erhält 10,9 g (100% d. Theorie) 2-Amino-4-(2-methylpropoxy-methylphosphinoyl)-butyronitril als farbloses Oel.

$^1$H-NMR ($CDCl_3$): 0,90 (d, J=6Hz), 1,43 (d,J=14Hz,3H) überlagert durch 1,00-2,60 (m,7H), 3,70 (t,J=7Hz,3H)

IR (Film): 895, 1025, 1205, 1300, 1475, 1620, 2230, 2870, 2960, 3290, 3370

$R_f$-Werte:

Kieselgel-Fertigplatten (Merck); Laufmittel: Toluol/-Ethylacetat/n-Butanol 1:1:1

Produkt 0,16

Ausgangsmaterial 0,48

$C_9H_{19}N_2O_2P$ (218,24) Ber. C 49,5; H 8,8; N 12,8

Gef. C 49,1; H 8,7; N 12,0

Beispiel 2

2-Amino-4-(3-methylbutoxy-methylphosphinoyl)-butyro-nitril

29,28 g (0.095 mol) 3,3-Diacetoxy-1-(3-methylbutoxy-methylphosphinoyl)-propan, 10,20 g (0.19 mol) Ammoniumchlorid und 4,65 g (0.095 mol) Natriumcyanid werden in 120 ml konz. Ammoniak (ca. 25 %ig) gelöst, wobei die Temperatur auf 40°C ansteigt. Die Reaktionsmischung wird 1 h bei Raumtemperatur gerührt. Der pH-Wert steigt von 9,8 zu Beginn auf 10,4 gegen Ende der Reaktion an. Die wäßrige Reaktionsmischung wird 3 mal mit je 100 ml Dichlormethan extrahiert, die organischen Extrakte vereinigt, über $Na_2SO_4$ getrocknet und eingeengt. Lösungsmittelreste werden im Hochvakuum bei Raumtemperatur entfernt.

Man erhält 21,4 g (97,1 % der Theorie) 2-Amino-4-(3-methylbutoxy-methylphosphinoyl)-butyro-nitril als farbloses Öl.

$^1$H-NMR ($CDCl_3$): 0,92 (d,J=6Hz,6H), 1,48 (d,J=14Hz, 3H), überlagert durch 1,40–2,10 (m, 9H), 3,84 (t,J=6Hz, 1H) teilweise überlagert durch 4,00 (q,J=7Hz, 2H)

IR-(Film): 905, 990 1015, 1060, 1205, 1305, 1480, 1625, 2230, 2870, 2930, 2960, 3290, 3370

$R_f$-Werte:

Kieselgel-Fertigplatten (Merck); Laufmittel: n-Butanol/ Eisessig/Wasser 5:2:2

Produkt : 0,58

Ausgangsmaterial : 0,69

$C_{10}H_{21}N_2O_2P$ (232,26) Ber. C 51,7; H 9,1; N 12,1

Gef. C 51,4; H 9,2; N 11,1

Die Ausgangsverbindung des Beispiels 1 erhält man in folgender Weise:

3,3-Diacetoxy-1-(2-methylpropoxy-methyl-phosphinoyl)-propan

202 g (1,49 mol) Methanphosphonigsäuremono-2-methylpropylester werden auf 110°C erhitzt und unter Stickstoff mit einer Mischung aus 156 g (0,99 mol) 3,3-Diacetoxy-1-propen (hergestellt durch Umsetzung von Acrolein mit Acetanhydrid) und 4,7 g (0,022 mol) t-Butylperoctoat versetzt. Nach beendeter Zugabe (1 h) wird noch 1 h nachgerührt. Überschüssiger Methanphosphonigsäuremono-2-methylpropylester wird zunächst im Wasserstrahlvakuum dann im Hochvakuum entfernt. Als Rückstand verbleiben 306,2 g (92,9 %) 3,3-Diacetoxy-1-(2-methylpropoxy-methylphosphinoyl)-propan.

## Patentansprüche

1. Verfahren zur Herstellung von Verbindungen der allgemeinen Formel I

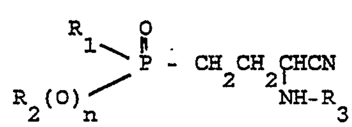

(I)

worin

$R_1$ = ($C_1$–$C_6$)-Alkyl, das durch Halogen oder Alkoxycarbonyl ein- oder mehrfach substituiert sein kann, ($C_6$–$C_{10}$)-Aryl, ($C_7$–$C_{10}$)-Aralkyl oder ($C_3$–$C_{10}$)-Cycloalkyl,

$R_2$ = ($C_1$–$C_6$)-Alkyl, das durch Halogen ein- oder mehrfach substituiert sein kann, ($C_6$-$C_{10}$)-Aryl, ($C_7$–$C_{10}$)-Aralkyl, ($C_3$–$C_{10}$)-Cycloalkyl,

$R_3$ = Wasserstoff, ($C_1$–$C_6$)-Alkyl oder Phenalkyl, ($C_1$–$C_6$)-Acyl, ($C_1$–$C_6$)-Alkoxycarbonyl oder ($C_6$–$C_{10}$)-Aryloxycarbonyl und

n = Null oder eins

bedeuten, dadurch gekennzeichnet, daß man Verbindungen der Formel II

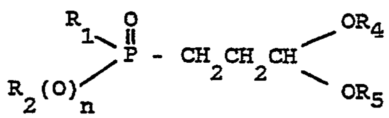

(II)

worin $R_4$ und $R_5$ unabhängig voneinander ($C_1$–$C_6$)-Acyl, ($C_1$–$C_6$)-Alkoxycarbonyl, Phenoxycarbonyl oder Naphthoxycarbonyl bedeuten,

in Gegenwart von Alkalicyaniden mit Aminen der allgemeinen Formel III

$H_2N$–$R_3$ (III),

umsetzt und gewünschtenfalls aus den erhaltenen Verbindungen der Formel I einen Rest $R_3 \neq H$ nach bekannten Methoden abspaltet.

2. Verfahren nach Anspruch 1, dadurch gekennzeichnet, daß man in wäßrigem Reaktionsmedium arbeitet.

3. Verfahren nach Anspruch 1 oder 2, dadurch gekennzeichnet, daß man den pH-Wert der Reaktionslösung auf 8 bis 12 einstellt.

4. Verfahren nach Anspruch 3, dadurch gekennzeichnet, daß man zur Einstellung des pH-Wertes Ammoniumchlorid verwendet.

**Claims**

1. A process for the preparation of a compound of the formula I

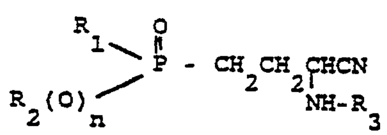

(I)

in which

$R_1$ denotes ($C_1$–$C_6$)-alkyl which can be substituted once or several times by halogen or alkoxycarbonyl, or denotes ($C_6$–$C_{10}$)-aryl, ($C_7$–$C_{10}$)-aralkyl or ($C_3$–$C_{10}$)-cycloalkyl,

$R_2$ denotes ($C_1$–$C_6$)-alkyl which can be substituted once or several times by halogen, or denotes ($C_3$–$C_{10}$)-aryl, ($C_7$–$C_{10}$)-aralkyl or ($C_3$–$C_{10}$)-cycloalkyl,

$R_3$ denotes hydrogen, ($C_1$–$C_6$)-alkyl or -phenalkyl, ($C_1$–$C_6$)-acyl, ($C_1$–$C_6$)-alkoxycarbonyl or ($C_6$–$C_{10}$)-aryloxycarbonyl,

and

n denotes zero or one,

which comprises reaction of a compound of the formula II

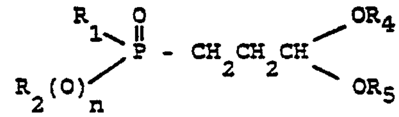

(II)

in which $R_4$ and $R_5$, independently of one another, denote ($C_1$–$C_6$)-acyl, ($C_1$–$C_6$)-alkoxycarbonyl, phenoxycarbonyl or naphthoxycarbonyl, in the presence of alkali metal cyanides, with amines of the formula III

$H_2N$–$R_3$ (III)

and, if desired, elimination, by known methods, of a radical $R_3 \neq H$ from the resulting compound of the formula 1.

2. The process as claimed in claim 1, which is carried out in an aqueous reaction medium.

3. The process as claimed in claim 1 or 2, wherein the pH of the reaction solution is adjusted to 8 to 12.

4. The process as claimed in claim 3, wherein ammonium chloride is used to adjust the pH.

**Revendications**

1. Procédé de préparation de composés répondant à la formule I:

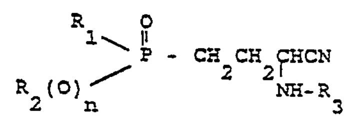

(I)

dans laquelle:

$R_1$ représente un alkyle en $C_1$–$C_6$ éventuellement porteur d'un ou de plusieurs substituants pris dans l'ensemble constitué par les halogènes et les radicaux alcoxycarbonyles, un aryle en $C_6$–$C_{10}$, un aralkyle en $C_7$–$C_{10}$ ou un cycloalkyle en $C_3$–$C_{10}$,

$R_2$ représente un alkyle en $C_1$–$C_6$ éventuellement porteur d'un ou plusieurs atomes d'halogènes, un aryle en $C_6$–$C_{10}$, un aralkyle en $C_7$–$C_{10}$ ou un cycloalkyle en $C_3$–$C_{10}$,

$R_3$ représente l'hydrogène, un alkyle en $C_1$–$C_6$, un phénylalkyle à alkyle en $C_1$–$C_6$, un acyle en $C_1$–$C_6$, un alcoxycarbonyle à alcoxy en $C_1$–$C_6$ ou un aryloxycarbonyle à aryle en $C_6$–$C_{10}$,

et

n est égal à 0 ou à 1,

procédé caractérisé en ce qu'on fait réagir des composés répondant à la formule générale II:

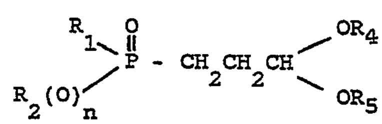

(II)

dans laquelle $R_4$ et $R_5$ représentent chacun, indépendamment l'un de l'autre, un acyle en $C_1$–$C_6$, un alcoxycarbonyle à alcoxy en $C_1$–$C_6$, un phénoxycarbonyle ou un naphtoxycarbonyle,

en présence de cyanures de métaux alcalins, avec des amines de formule générale III:

$H_2N$–$R_3$ (III),

et, si on le désire, on élimine un radical $R_3$ qui n'est pas l'hydrogène, par des méthodes connues, des composés de formule I obtenus.

2. Procédé selon la revendication 1 caractérisé en ce qu'on opère dans un milieu réactionnel aqueux.

3. Procédé selon l'une des revendications 1 et 2, caractérisé en ce qu'on règle le pH de la solution réactionnelle à une valeur comprise entre 8 et 12.

4. Procédé selon la revendication 3 caractérisé en ce qu'on utilise du chlorure d'ammonium pour régler le pH.